# FASCICULE DE BREVET EUROPEEN

(11) **EP 4 188 819 B1**
(45) Date de publication et mention de la délivrance du brevet: **15.05.2024**
(21) Numéro de dépôt: 21742440.7
(22) Date de dépôt: 16.07.2021
(51) Int. Cl.: B31B 70/14, B31B 70/16, B31B 70/62, B31B 150/00, B65D 27/06, B65D 27/16, B65D 27/34, B31B 70/00, B31B 160/10, B31B 70/81

(54) **ENVELOPPE RÉUTILISABLE AVEC VOLET DE FERMETURE PRÉDÉCOUPÉ, PROCÉDÉ ET MACHINE DE FABRICATION D'UNE TELLE ENVELOPPE**
WIEDERVERWENDBARER BRIEFUMSCHLAG MIT VORGESCHNITTENER VERSCHLUSSKLAPPE, VERFAHREN UND MASCHINE ZUR HERSTELLUNG EINES SOLCHEN UMSCHLAGS
REUSABLE ENVELOPE WITH PRE-CUT CLOSURE FLAP, METHOD AND MACHINE FOR MANUFACTURING SUCH AN ENVELOPE

(30) Priorité: 30.07.2020 FR 2008082
(43) Date de publication de la demande: 07.06.2023
(73) Titulaire: Holweg Group, 67120 Molsheim (FR)
(72) Inventeur: OBERHAUSSER, Freddy, 67100 Strasbourg (FR); FRIEDERICH, Marc, 67850 HERRLISHEIM (FR)
(74) Mandataire: Brungard, Yves Francois
(86) Numéro de dépôt international: PCT/EP2021/070057
(87) Numéro de publication internationale: WO 2022/023093

(56) Documents cités:
- US-A- 5 503 328
- US-A- 6 032 854
- US-A1- 2005 173 506

## Description

### Domaine de l'invention

L'invention concerne une enveloppe réutilisable, notamment en matériau flexible tel que du papier. Elle concerne également le procédé de fabrication de l'enveloppe ainsi qu'une machine de fabrication de ladite enveloppe.

### Technique antérieure

On connaît depuis longtemps des procédés industriels de fabrication de sacs en matière flexible telle que du papier ou de la matière synthétique. Par exemple, le document FR 1 270 400 décrit une machine et un procédé dans lequel une bande est déroulée puis formée en boyau. Le boyau est aplati de telle sorte qu'il comporte une première et une deuxième paroi, puis le boyau est sectionné en tronçon de telle sorte qu'à chaque extrémité du tronçon subsiste une patte qui prolonge la première ou la deuxième paroi. Dans une étape de pliage, la patte est pliée et collée en étant rabattue sur la paroi autre que celle dont la patte est issue. On peut ainsi fabriquer des sacs à une grande cadence avec une grande variété de matières et de formats. Le document FR 786 579 montre plusieurs exemples de cette technique. Il montre en particulier sur les figures 4 à 6 un procédé de fabrication dans lequel la bande de papier est munie à intervalles réguliers de lignes de perforations transversales, avec une ligne au centre et deux lignes, décalées axialement par rapport à la ligne centrale sur chaque lé de la bande.

Le boyau est formé en repliant chaque bord par-dessus la partie centrale et en collant entre eux les deux bords le long d'une jonction centrale de telle sorte que les perforations forment deux lignes transversales décalées respectivement sur l'une et l'autre des faces du boyau. Le boyau ainsi formé passe entre une paire de galets d'entraînement qui entraînent le boyau à une vitesse constante. La partie avant du boyau est saisie par le dispositif de pliage qui comporte un tambour et un rouleau de pliage contrarotatifs. Le tambour et le rouleau de pliage tournent avec une vitesse périphérique supérieure à celle de la paire de galets d'entraînement. Le rouleau de pliage comporte une barre apte à pincer l'avant du boyau contre le tambour, de telle sorte que la partie avant du boyau est tirée et séparée par déchirement le long des perforations pour former un tronçon. A la séparation, du fait des décalages entre les lignes de perforation, une patte arrière est ainsi formée sur le tronçon, de même qu'une patte avant à l'extrémité du boyau. Cette patte avant se retrouvera sur le tronçon suivant. La patte avant est repliée par le dispositif de pliage sur une zone encollée pour fermer la partie avant du tronçon. Pour cela, le rouleau comporte en outre une lame de pliage, placée juste en arrière de la barre, qui pousse le boyau dans une pince portée par le tambour de manière à plier le boyau.

Dans une variante, le boyau est formé avec des soufflets qui relient la première et la deuxième paroi. Le document WO 2016 097310 A1 montre un exemple de tels sacs. Ce document montre en outre une machine permettant de former une enveloppe à partir du boyau en utilisant deux stations comportant chacune une paire de cylindres contrarotatifs et dont le travail permet de réaliser la séparation en tronçons et l'arrachement d'un déchet pour faire apparaître une patte à l'avant du tronçon sur la même paroi que la patte arrière. Ainsi, après repliement des pattes, celle-ci sont appliquées sur la même paroi.

De tels sacs peuvent être utilisés comme enveloppes d'expédition. Dans ce cas, la patte arrière est munie d'une couche adhésive, par exemple protégée par des moyens de protection tels qu'une feuille de papier siliconé. Cette feuille peut être retirée, laissant apparaître la couche adhésive. La patte arrière sert de volet de fermeture qui peut être replié en amenant la couche adhésive contre la paroi opposée à celle dont la patte arrière est issue, de manière à ce que la couche adhésive colle sur la paroi et scelle l'enveloppe. Ainsi, la paroi dont les pattes sont issues présente une face lisse lorsque les pattes sont collées sur la face opposée pour fermer l'enveloppe. Lorsque l'enveloppe est reçue par son destinataire, celui-ci déchire l'extrémité de l'enveloppe, par exemple en niveau du volet, pour accéder au contenu de celle-ci.

Pour réaliser une telle enveloppe, le procédé tel que décrit précédemment est modifié pour inclure le dépôt de la couche adhésive et des moyens de protection sur la couche adhésive avant la formation du boyau. L'emplacement du dépôt est réglé de telle sorte que les moyens de protection sont découverts sur la patte arrière lors de la séparation des tronçons. Le document GB 390,455 montre un procédé d'application d'une fenêtre transparente sur une bande de papier avant la formation d'une enveloppe. Cette même technique est utilisée pour déposer les moyens de protection sur une couche adhésive préalablement déposée.

Une telle enveloppe n'est utilisable qu'une fois. Cependant, il est de plus en plus fréquent, en particulier dans le commerce par correspondance ou sur Internet, que le destinataire initial souhaite renvoyer l'article reçu. Il doit dans ce cas se procurer une autre enveloppe.

Il a été proposé dans le document US 5,503,328 une enveloppe qui puisse être utilisée plus d'une fois. Pour cela, le volet comporte deux couches adhésives séparées par un espace de séparation. Chaque couche adhésive est protégée par une feuille de protection. L'espace de séparation reçoit une bande de déchirement. Lors d'un premier envoi, la feuille de protection de la couche adhésive la plus externe est retirée et le volet rabattu pour que la couche adhésive colle sur l'enveloppe, de manière à la fermer. Pour l'ouvrir, le destinataire tire sur la bande de déchirement de manière à ce que le volet se déchire au niveau de l'espace de séparation. Le destinataire peut ainsi réutiliser l'enveloppe en retirant la deuxième feuille de protection et en rabattant la partie restante du volet pour que la deuxième couche adhésive colle sur l'enveloppe pour la fermer.

Bien que donnant satisfaction, cette enveloppe est compliquée à fabriquer. En particulier, le dépôt de la bande de déchirement qui est fabriquée dans un matériau résistant se fait en déroulant la bande, ce qui nécessite que le volet soit parallèle au sens de déplacement lors de la production des enveloppes. Les cadences de production de ce genre sont moins élevées que celles des enveloppes avec le procédé du document WO 2016 097310 A1.

Le document US 6 032 854 montre un exemple d'enveloppe réutilisable.

### Exposé de l'invention

C'est donc un objectif de l'invention de proposer une enveloppe qui puisse être réutilisable tout en étant produite à haute cadence.

Avec ces objectifs en vue, l'invention a pour objet une enveloppe comportant une ouverture et un volet de fermeture pour fermer l'ouverture, le volet de fermeture étant rabattable sur une première paroi de l'enveloppe et comportant sur une face intérieure une première couche adhésive protégée par des moyens de protection, une deuxième couche adhésive protégée par les moyens de protection et séparée de la première couche adhésive par un espace de séparation, le volet étant prédécoupé par une première et une deuxième ligne d'affaiblissement dans l'espace de séparation, caractérisé en ce que les moyens de protection sont formés par une feuille s'étendant sur les deux couches adhésives, la feuille comportant une troisième ligne d'affaiblissement alignée avec la première ligne d'affaiblissement et une quatrième ligne d'affaiblissement alignée avec la deuxième ligne d'affaiblissement.

Une telle enveloppe est réutilisable dans la mesure où on peut fermer le volet une première fois en détachant la feuille de protection pour libérer la première couche de colle et coller la première couche adhésive sur la première paroi, puis on peut ouvrir l'enveloppe en arrachant la lanière de matériau délimitée entre la première et la deuxième ligne d'affaiblissement et la partie de la feuille située entre la troisième et la quatrième ligne. Enfin on peut fermer une deuxième fois l'enveloppe en libérant la deuxième couche adhésive en retirant le reste de la feuille pour la coller sur la première paroi. Une telle enveloppe peut être produite de manière productive en étant produite entièrement en continu et sans reprise. La feuille de protection est suffisamment large pour pouvoir être déposée dans un mouvement selon sa direction transversale, comme on le verra par la suite.

Selon un perfectionnement, la feuille et le volet sont collés entre les lignes d'affaiblissement. Le détachement de la lanière est alors plus sûrement réalisé, du fait de la cohésion de la partie issue du volet et de celle issue de la feuille.

Selon un mode de réalisation, les lignes d'affaiblissement sont des lignes de perforations. La taille et l'espacement entre les perforations peuvent être réglés de manière à ajuster l'affaiblissement de la bande de matériau.

Selon un autre mode de réalisation, les lignes d'affaiblissement sont des lignes de prédécoupe dans l'épaisseur. On réalise de telles lignes en pressant le volet avec une lame fine contre une surface dure sans traverser toute l'épaisseur. Un déchirement est alors guidé le long de cette ligne d'affaiblissement lors du retrait de la lanière.

Selon une disposition, l'enveloppe comporte une deuxième paroi, dont le volet est issu, et reliée à la première paroi le long de bords externes de la première paroi. La liaison entre la première et la deuxième paroi intervient du fait que la bande de matériau est pliée entre les deux, ce qui fait une liaison résistante.

De manière particulière, la première et la deuxième paroi sont reliées par des soufflets s'étendant le long des bords externes. Les soufflets sont également issus de la même bande de matériau en réalisant des plis. L'enveloppe peut contenir un contenu épais tout en étant résistante.

Selon un perfectionnement, le volet comporte une entaille à au moins l'une des extrémités d'au moins l'une des lignes d'affaiblissement. Ainsi, l'entaille amorce le déchirement de la lanière.

L'invention a aussi pour objet un procédé de fabrication d'une enveloppe telle que décrite précédemment, selon lequel on forme un volet de fermeture dans le prolongement d'une deuxième paroi de l'enveloppe, on dépose sur le volet deux couches adhésives parallèles l'une à l'autre et séparée par un espace de séparation, caractérisé en ce qu'on dépose une feuille formant moyens de protection sur les deux couches adhésives, on affaiblit ensemble la feuille et le volet pour réaliser une première ligne d'affaiblissement dans l'espace de séparation du volet alignée avec une troisième ligne de perforation dans la feuille, et une deuxième ligne de perforation dans l'espace de séparation du volet alignée avec une quatrième ligne d'affaiblissement dans la feuille, les lignes d'affaiblissement s'étendant parallèlement dans l'espace de séparation. Les lignes d'affaiblissement qui sont réalisées ensemble ont un alignement garanti de ce fait.

Selon un mode de réalisation, l'enveloppe est formée à partir d'une bande de matériau souple sur laquelle sont d'abord réalisés la dépose des couches adhésives et de la feuille de protection, puis la bande est refermée en un boyau en rejoignant les lés de la bande, puis le boyau est séparé en tronçons laissant subsister le volet à une première extrémité du tronçon, chaque tronçon formant une enveloppe après la fermeture d'une deuxième extrémité opposée à la première extrémité. Ce procédé est la modification d'un procédé classique de fabrication d'enveloppe, dans lequel on ajoute les moyens de protection et les couches adhésives avant la formation du boyau.

De manière particulière, les lignes d'affaiblissement sont réalisées après la séparation du boyau en tronçons.

Selon un autre mode de réalisation, l'enveloppe est formée à partir d'une bande de matériau souple refermée en un boyau en rejoignant les lés de la bande, puis le boyau est séparé en tronçons laissant subsister le volet à une première extrémité du tronçon, chaque tronçon formant une enveloppe après la fermeture d'une deuxième extrémité opposée à la première extrémité, et volet sur lequel sont réalisés la dépose des couches adhésives, de la feuille de protection et les lignes d'affaiblissement. Ce procédé est la modification d'un procédé classique de fabrication d'enveloppe, dans lequel on ajoute les moyens de protection et les couches adhésives après la formation de l'enveloppe ou d'une ébauche de l'enveloppe.

L'invention a aussi pour objet une machine de fabrication d'une enveloppe mettant en oeuvre un procédé tel que décrit précédemment, la machine comportant un dispositif de formation de boyau pour former un boyau à partir d'une bande de matériau flexible, un dispositif de séparation pour séparer un tronçon du boyau à l'avant du boyau en formant un volet de fermeture à l'une des extrémités du tronçon de boyau, le volet prolongeant le tronçon au-delà de l'extrémité d'une première paroi, la machine étant caractérisée en ce qu'elle comporte des premiers moyens de dépose pour déposer sur la bande de matériau deux couches adhésives parallèles l'une à l'autre et séparée par un espace de séparation au niveau du volet de fermeture, les moyens de dépose étant prévus pour déposer en outre une feuille formant moyens de protection sur les deux couches adhésives, la machine comportant en outre des moyens d'affaiblissement pour réaliser ensemble une première ligne d'affaiblissement et une troisième ligne d'affaiblissement sur respectivement le volet et la feuille alignées et dans l'espace de séparation du volet, et ensemble une deuxième ligne d'affaiblissement dans l'espace de séparation du volet alignée avec une quatrième ligne de la feuille, les lignes d'affaiblissement s'étendant parallèlement dans l'espace de séparation.

Selon un mode de réalisation, les moyens de dépose sont situés en amont du dispositif de formation de boyau. Ainsi, les moyens de dépose peuvent être insérés en amont du dispositif de formation de boyau, par exemple par un bloc ayant son propre bâti.

Selon un autre mode de réalisation, les moyens de dépose sont situés en aval du dispositif de séparation du boyau. Les moyens de dépose peuvent être insérés sur le même bâti que le dispositif de séparation, ce qui évite de prévoir un bâti spécifique.

Selon une disposition constructive, les moyens d'affaiblissement sont situés en aval du dispositif de séparation du boyau et des moyens de dépose.

Selon une disposition constructive, la machine comporte un dispositif de formation de fond pour former l'enveloppe avec chaque tronçon de boyau en fermant l'avant du tronçon de boyau.

### Brève description des figures

L'invention sera mieux comprise et d'autres particularités et avantages apparaîtront à la lecture de la description qui va suivre, la description faisant référence aux dessins annexés parmi lesquels :
[Fig.1] : la figure 1 est une vue en perspective d'une enveloppe conforme à un mode de réalisation de l'invention ;
[Fig.2] : la figure 2 est une vue similaire à la figure 1 de l'enveloppe prête à être fermée pour une première fois ;
[Fig.3] : la figure 3 est une vue similaire à la figure 1 de l'enveloppe fermée pour une première fois ;
[Fig.4] : la figure 4 est une vue similaire à la figure 1 de l'enveloppe en cours d'ouverture ;
[Fig.5] : la figure 5 est une vue similaire à la figure 1 de l'enveloppe prête à être fermée pour une deuxième fois ;
[Fig.6] : la figure 6 est une vue similaire à la figure 1 de l'enveloppe fermée pour une deuxième fois ;
[Fig.7] : la figure 7 est une vue schématique d'une machine de fabrication d'enveloppes de la figure 1 selon un premier mode de réalisation ;
[Fig.8] : la figure 8 est une vue schématique d'une machine de fabrication d'enveloppes de la figure 1 selon un deuxième mode de réalisation.

### Description détaillée

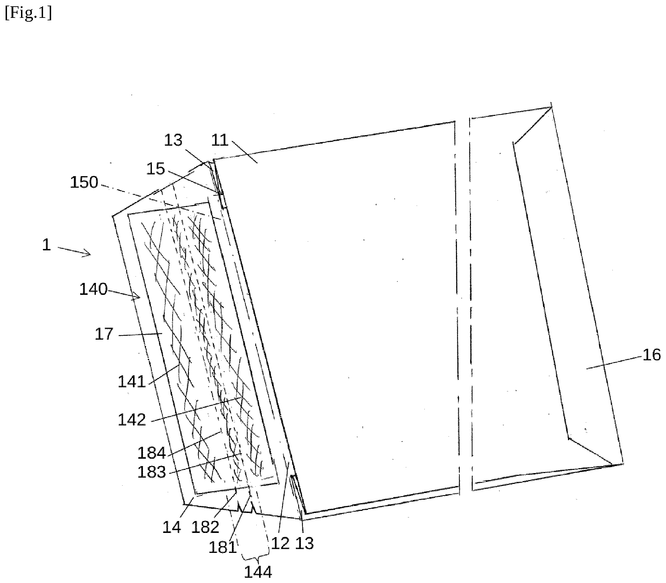

Une enveloppe 1 conforme à un mode de réalisation de l'invention est montrée sur les figures 1 à 6. L'enveloppe est réalisée en matière flexible telle que du papier ou une matière synthétique tissée ou textile non tissée. L'enveloppe 1 comporte une première paroi 11 et une deuxième paroi 12 superposées et reliées par des soufflets 13 s'étendant le long de bords externes 110. L'enveloppe 1 comporte un volet 14 de fermeture issu de la deuxième paroi 12 et qui s'étend au-delà d'une ouverture 15 de l'enveloppe 1 délimitée entre les parois 11, 12 et les soufflets 13. A l'opposé du volet 14, l'enveloppe 1 comporte une patte 16 issue de la deuxième paroi 12, repliée sur la première paroi 11 et collée à celle-ci pour former un fond. L'enveloppe 1 peut être fermée en pliant le volet 14 de fermeture le long d'une ligne de volet 150 s'étendant le long de l'ouverture 15 et séparant le volet 14 de fermeture de la deuxième paroi 12, puis en rabattant le volet 14 sur la première paroi 11, comme détaillé ci-après.

Le volet 14 de fermeture comporte sur une face intérieure 140 une première couche adhésive 141 s'étendant parallèlement à la ligne de volet 14 et une deuxième couche adhésive 142 s'étendant parallèlement à la ligne de volet 14 entre ladite ligne et la première couche adhésive 141. La première et la deuxième couche adhésive 141, 142 sont séparées par un espace de séparation 144. Une feuille 17 formant moyens de protection recouvre la première couche adhésive 141 et la deuxième couche adhésive 142 pour les protéger. La feuille 17 est par exemple un papier siliconé.

Le volet 14 est prédécoupé par une première et une deuxième ligne d'affaiblissement 181, 182 dans l'espace de séparation 144, de même que la feuille 17 qui comporte une troisième ligne d'affaiblissement 183 alignée avec la première ligne d'affaiblissement 181 et une quatrième ligne d'affaiblissement 184 alignée avec la deuxième ligne d'affaiblissement 182. Une troisième couche adhésive recouvre l'espace de séparation 144 entre les lignes d'affaiblissement pour coller entre eux la feuille 17 et le volet 14 entre les lignes d'affaiblissement 181, 182, 183, 184. Dans l'exemple représenté, les lignes d'affaiblissement 181, 182, 183, 184 sont des lignes de perforations. Le volet 14 comporte une entaille 145 à l'une des extrémités de la première et de la deuxième ligne d'affaiblissement 181, 182.

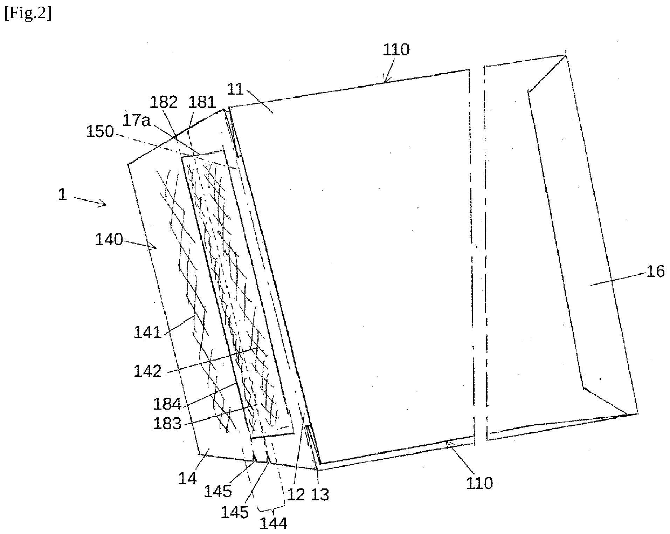

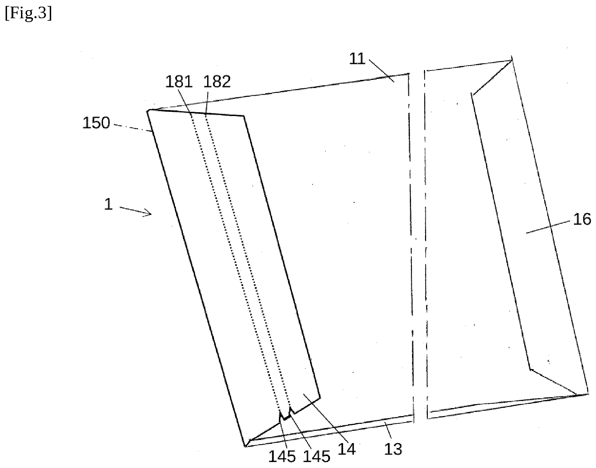

Lors de l'utilisation d'une telle enveloppe 1, un utilisateur introduit un contenu, non représenté, dans l'enveloppe 1 en passant par l'ouverture 15, puis détache la partie de la feuille 17 qui recouvre la première couche adhésive 141 en la déchirant le long de la quatrième ligne d'affaiblissement 184, comme le montre la figure 2, en laissant subsister une partie 17a de la feuille. Il rabat le volet 14 en le pliant le long de la ligne de volet 14 et plaque la première couche adhésive 141 sur la première paroi 11 de manière à obtenir le collage du volet 14 sur celle-ci. L'enveloppe 1 est alors fermée, comme le montre la figure 3, et peut être envoyée.

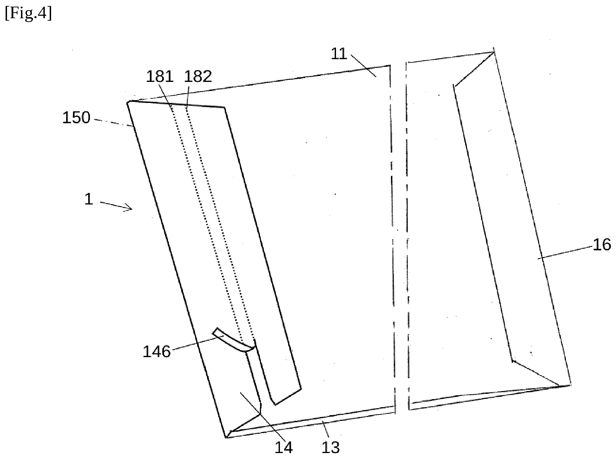

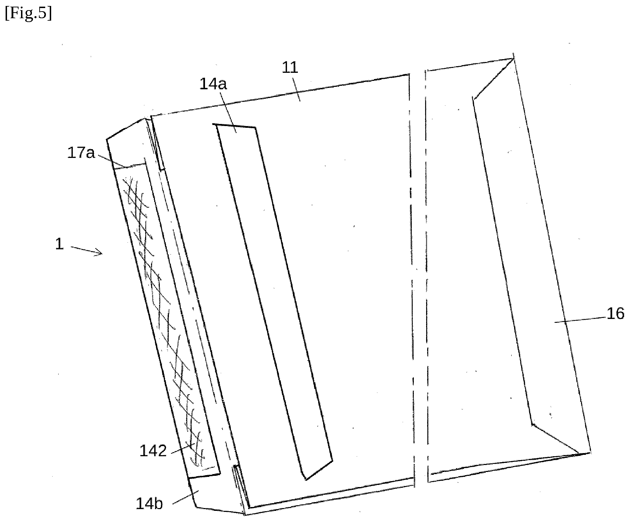

Lorsqu'il reçoit l'enveloppe 1, le destinataire tire sur l'ensemble formé par la partie de volet 14 situé entre les lignes d'affaiblissement 181, 182 et la partie de la feuille 17 correspondante. Pour cela, il est aidé par les entailles 145 qui délimite une amorce. La partie qui se détache forme une lanière 146 qui sépare le volet 14 en deux parties 14a, 14b, comme le montre la figure 4, l'une 14a qui reste collée sur la première paroi 11, et une autre 14b qui s'ouvre et libère l'ouverture 15, comme le montre la figure 5.

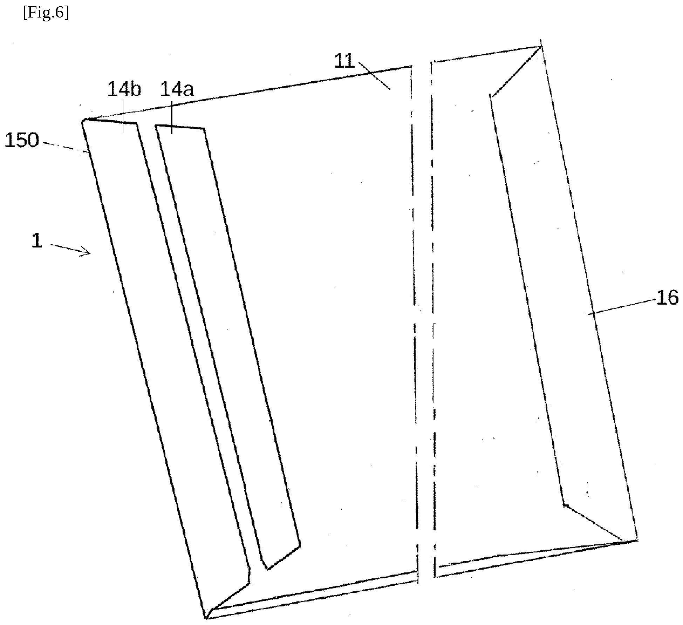

L'enveloppe 1 peut être réutilisée par le destinataire. Pour cela, il retire le reste de la feuille 17a pour libérer la deuxième couche adhésive 142, il replie le volet 14 le long de la ligne de volet 150 et plaque la deuxième couche adhésive 142 sur la première paroi 11 de manière à obtenir le collage de la partie de volet 14b sur celle-ci, comme le montre la figure 6.

De manière alternative, les lignes d'affaiblissement peuvent être des lignes de prédécoupe dans l'épaisseur du volet 14 et de la feuille 17.

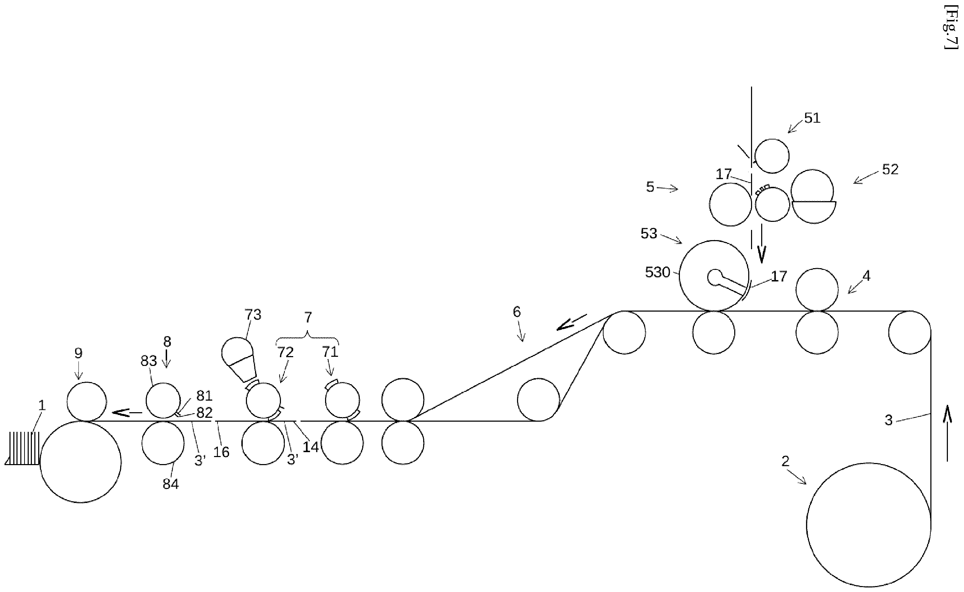

Pour fabriquer une enveloppe 1 telle que décrite précédemment, on utilise par exemple une machine telle que schématisée sur la figure 7. Une telle machine comporte successivement dans le sens de dévidage un dispositif de dévidage 2 pour dévider une bande 3 de matériau flexible tel que du papier en bobine pour la dévider, des moyens de perforation 4 pour réaliser des perforations transversalement sur la bande 3 de matériau, des moyens de dépose 5, un dispositif de formation de boyau 6 pour former un boyau à partir de la bande 3 de matériau, un dispositif de séparation 7 pour séparer un tronçon 3' du boyau à l'avant du boyau en formant le volet 14 de fermeture à une extrémité arrière du tronçon 3' de boyau, des moyens d'affaiblissement 8 et un dispositif de formation de fond 9 pour former l'enveloppe 1 avec chaque tronçon 3' de boyau en fermant l'avant du tronçon 3' de boyau. Les enveloppes 1 formées sont stockées en pile à la sortie du dispositif de formation de fond 9.

Le dispositif de formation de boyau 6 est classique et ne sera pas décrit plus en détail. Le dispositif de séparation 7 comporte une station de maintien 71 et une station d'arrachement 72 telles que décrites dans le document WO 2016/097310 A1. Le fonctionnement de ce dispositif de séparation 7 n'est pas repris ici, hormis qu'il permet de fournir aux moyens d'affaiblissement 8 des tronçons 3' de boyau comportant une patte 16 à l'avant du tronçon 3', qui permettra ensuite de former le fond de l'enveloppe 1, et le volet 14 à l'arrière du tronçon 3', la deuxième paroi 12 étant située en partie inférieure. Un déchet, non représenté, est extrait du boyau par la station d'arrachement 72 et des moyens d'aspiration 73 pour découvrir le volet 14.

Le dispositif de formation de fond 9 est classique et ne sera pas décrit plus en détail. Il permet de plier et coller la patte 16 pour fermer l'enveloppe.

Les moyens de dépose 5 sont prévus pour déposer la première, la deuxième et la troisième couche adhésive 141, 142, 143 sur la bande 3 de matériau et les recouvrir par la feuille 17 au niveau de ce qui deviendra le volet 14 de fermeture. Pour cela, la feuille 17 arrive en continu, est découpée par une station de coupe 51 et reçoit les couches adhésives dans une station d'encollage 52. Ensuite, elle est reprise par une station de transfert 53 qui l'aspire à la surface d'un rouleau 530 et la presse sur la bande 3 de matériau pour déposer la feuille 17 et les couches adhésives 141, 142, 143. La face de la feuille 17 en contact avec les couches adhésives 141, 142, 143 est siliconée de telle sorte que la feuille 17 pourra ensuite être extraite alors que la couche adhésive 141, 142, 143 reste sur la bande 3 de matériau.

Les moyens d'affaiblissement 8 comportent deux lames 81, 82 crantées et faisant saillie d'un rouleau 83 et un contre-rouleau 84 comportant une surface souple. En pinçant le volet 14 du tronçon 3' de boyau entre le rouleau 83 et le contre-rouleau 84, on réalise la première ligne d'affaiblissement 181 et la troisième ligne d'affaiblissement 183 sur respectivement le volet 14 et la feuille 17 alignées et dans l'espace de séparation 144 du volet 14, et la deuxième ligne d'affaiblissement 182 dans l'espace de séparation 144 du volet 14 alignée avec la quatrième ligne d'affaiblissement 184 de la feuille 17, les lignes d'affaiblissement ayant la forme de lignes de perforations.

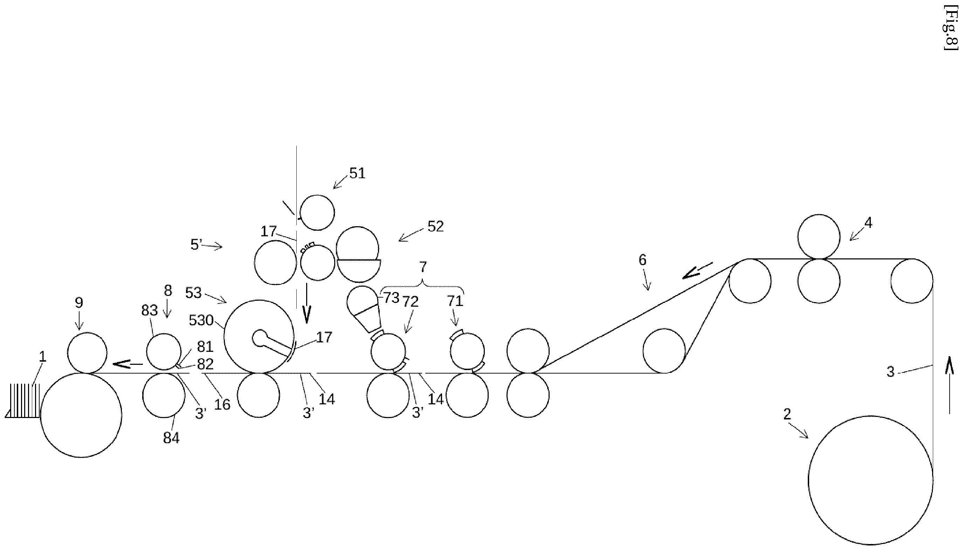

Dans un deuxième mode de réalisation, la machine, telle que montrée sur la figure 8, se distingue de celle du premier mode de réalisation en ce que les moyens de dépose 5' sont situés en aval du dispositif de séparation 7 du boyau et en amont des moyens d'affaiblissement 8.

L'invention n'est pas limitée aux modes de réalisation qui viennent d'être décrits uniquement à titre d'exemple. Les enveloppes peuvent être réalisées sans soufflets, c'est-à-dire que la première paroi et la deuxième paroi sont reliées entre elles par un simple pli le long des bords externes. Les moyens d'affaiblissement pourraient être placés entre les moyens de dépose et les moyens de formation du boyau.

## Revendications

1. Enveloppe comportant une ouverture (15) et un volet (14) de fermeture pour fermer l'ouverture (15), le volet (14) de fermeture étant rabattable sur une première paroi (11) de l'enveloppe (1) et comportant sur une face intérieure (140) une première couche adhésive (141) protégée par des moyens de protection (17), une deuxième couche adhésive (142) protégée par les moyens de protection (17) et séparée de la première couche adhésive (141) par un espace de séparation (144), le volet (14) étant prédécoupé par une première et une deuxième ligne d'affaiblissement (181, 182) dans l'espace de séparation (144), les moyens de protection étant formés par une feuille (17) s'étendant sur les deux couches adhésives (141, 142), **caractérisé en ce que** la feuille (17) comporte une troisième ligne d'affaiblissement (183) alignée avec la première ligne d'affaiblissement (181) et une quatrième ligne d'affaiblissement (184) alignée avec la deuxième ligne d'affaiblissement (182).

2. Enveloppe selon la revendication 1, dans laquelle la feuille (17) et le volet (14) sont collés entre les lignes d'affaiblissement (181, 182, 183, 184).

3. Enveloppe selon l'une des revendications 1 ou 2, dans laquelle les lignes d'affaiblissement (181, 182, 183, 184) sont des lignes de perforations.

4. Enveloppe selon l'une des revendications 1 ou 2, dans laquelle les lignes d'affaiblissement (181, 182, 183, 184) sont des lignes de prédécoupe dans l'épaisseur.

5. Enveloppe selon l'une des revendications précédentes, **caractérisée en ce qu'**elle comporte une deuxième paroi (12), dont le volet (14) est issu, et reliée à la première paroi (11) le long de bords externes (110) de la première paroi (11).

6. Enveloppe selon la revendication 5, dans laquelle la première et la deuxième paroi (11, 12) sont reliées par des soufflets (13) s'étendant le long des bords externes (110).

7. Enveloppe selon l'une des revendications précédentes, dans laquelle le volet (14) comporte une entaille (145) à au moins l'une des extrémités d'au moins l'une des lignes d'affaiblissement.

8. Procédé de fabrication d'une enveloppe (1) selon l'une des revendications 1 à 7, selon lequel on forme un volet (14) de fermeture dans le prolongement d'une deuxième paroi (12) de l'enveloppe (1), on dépose sur le volet (14) deux couches adhésives parallèles l'une à l'autre et séparée par un espace de séparation (144), on dépose une feuille (17) formant moyens de protection (17) sur les deux couches adhésives, **caractérisé en ce qu'**on affaiblit ensemble la feuille (17) et le volet (14) pour réaliser une première ligne d'affaiblissement dans l'espace de séparation (144) du volet (14) alignée avec une troisième ligne de perforation dans la feuille (17), et une deuxième ligne de perforation dans l'espace de séparation (144) du volet (14) alignée avec une quatrième ligne d'affaiblissement dans la feuille (17), les lignes d'affaiblissement s'étendant parallèlement dans l'espace de séparation (144).

9. Procédé selon la revendication 8, selon lequel l'enveloppe (1) est formée à partir d'une bande (3) de matériau souple sur laquelle sont d'abord réalisés la dépose des couches adhésives et de la feuille (17) de protection, puis la bande (3) est refermée en un boyau en rejoignant les lés de la bande (3), puis le boyau est séparé en tronçons laissant subsister le volet (14) à une première extrémité du tronçon (3'), chaque tronçon (3') formant une enveloppe (1) après la fermeture d'une deuxième extrémité opposée à la première extrémité.

10. Procédé selon la revendication 9, dans lequel les lignes d'affaiblissement sont réalisées après la séparation du boyau en tronçons.

11. Procédé selon la revendication 8, selon lequel l'enveloppe (1) est formée à partir d'une bande (3) de matériau souple refermée en un boyau en rejoignant les lés de la bande (3), puis le boyau est séparé en tronçons laissant subsister le volet (14) à une première extrémité du tronçon (3'), chaque tronçon (3') formant une enveloppe (1) après la fermeture d'une deuxième extrémité opposée à la première extrémité, et volet (14) sur lequel sont réalisés la dépose des couches adhésives, de la feuille (17) de protection et les lignes d'affaiblissement (181, 182, 183, 184).

12. Machine de fabrication d'une enveloppe (1) mettant en oeuvre un procédé selon l'une des revendications 8 à 10, la machine comportant un dispositif de formation de boyau (6) pour former un boyau à partir d'une bande (3) de matériau flexible, un dispositif de séparation (7) pour séparer un tronçon (3') du boyau à l'avant du boyau en formant un volet (14) de fermeture à l'une des extrémités du tronçon (3') de boyau, le volet (14) prolongeant le tronçon (3') au-delà de l'extrémité d'une première paroi (11), des moyens de dépose (5, 5') pour déposer sur la bande (3) de matériau deux couches adhésives parallèles l'une à l'autre et séparée par un espace de séparation (144) au niveau du volet (14) de fermeture, les moyens de dépose (5, 5') étant prévus pour déposer en outre une feuille (17) formant moyens de protection sur les deux couches adhésives, la machine étant **caractérisée en ce qu'**elle comporte en outre des moyens d'affaiblissement (8) pour réaliser ensemble une première ligne d'affaiblissement et une troisième ligne d'affaiblissement sur respectivement le volet (14) et la feuille (17) alignées et dans l'espace de séparation (144) du volet (14), et pour réaliser ensemble une deuxième ligne d'affaiblissement et une quatrième ligne de la feuille (17) dans l'espace de séparation (144) du volet (14) et alignées, les lignes d'affaiblissement s'étendant parallèlement dans l'espace de séparation (144).

13. Machine selon la revendication 12, dans laquelle les moyens de dépose (5) sont situés en amont du dispositif de formation de boyau (6).

14. Machine selon la revendication 12, dans laquelle les moyens de dépose (5') sont situés en aval du dispositif de séparation (7).

15. Machine selon l'une des revendications 12 à 14, dans laquelle les moyens d'affaiblissement (8) sont situés en aval du dispositif de séparation (7) du boyau et des moyens de dépose (5, 5').

16. Machine selon l'une des revendications 12 à 15, **caractérisée en ce qu'**elle comporte un dispositif de formation de fond (9) pour former l'enveloppe (1) avec chaque tronçon (3') de boyau en fermant l'avant du tronçon (3') de boyau.

## Patentansprüche

1. Umschlag mit einer Öffnung (15) und einer Verschlussklappe (14) zum Verschließen der Öffnung (15), wobei: die Verschlussklappe (14) sich auf eine erste Wandung (11) des Umschlags (1) klappen lässt und an einer Innenseite (140) eine erste von Schutzmitteln (17) geschützte Klebeschicht (141) und eine zweite von Schutzmitteln (17) geschützte Klebeschicht (142) aufweist, die von der ersten Klebeschicht (141) durch einen Trennbereich (144) getrennt ist; die Klappe (14) durch eine erste und eine zweite Schwächungslinie (181, 182) im Trennbereich (144) vorgestanzt ist; die Schutzmittel von einem Blatt (17) gebildet werden, das sich über die beiden Klebeschichten (141, 142) erstreckt; und der ferner **dadurch gekennzeichnet ist, dass** das Blatt (17) eine dritte Schwächungslinie (183) aufweist, die mit der ersten Schwächungslinie (181) fluchtet, und eine vierte Schwächungslinie (184) aufweist, die mit der zweiten Schwächungslinie (182) fluchtet.

2. Umschlag gemäß Anspruch 1, in dem das Blatt (17) und die Klappe (14) zwischen den Schwächungslinien (181, 182, 183, 184) verklebt sind.

3. Umschlag gemäß einem der Ansprüche 1 oder 2, in welchem die Schwächungslinien (181, 182, 183, 184) als Perforationslinien ausgeführt sind.

4. Umschlag gemäß einem der Ansprüche 1 oder 2, in welchem die Schwächungslinien (181, 182, 183, 184) in der Dicke als Vorschneidelinien ausgeführt sind.

5. Umschlag gemäß einem der vorstehenden Ansprüche, der durch das Vorhandensein einer zweiten Wandung (12) gekennzeichnet ist, aus der die Klappe (14) hervorgeht und die mit der ersten Wandung (11) an Außenrändern (110) dieser ersten Wandung (11) verbunden ist.

6. Umschlag gemäß Anspruch 5, bei dem die erste (11) und die zweite (12) Wandung durch Seitenfalten (13) miteinander verbunden sind, die sich entlang der Außenränder (110) erstrecken.

7. Umschlag gemäß einem der vorstehenden Ansprüche, bei dem die Klappe (14) an mindestens einem der Enden mindestens einer der Schwächungslinien eine Einkerbung (145) aufweist.

8. Verfahren zur Herstellung eines Umschlags (1) gemäß einem der Ansprüche 1 bis 7, demzufolge in der Verlängerung einer zweiten Wandung (12) des Umschlags (1) eine Verschlussklappe (14) gebildet wird; auf der Klappe (14) zwei zueinander parallele, durch einen Trennbereich (144) voneinander getrennte Klebeschichten aufgetragen werden; ein Blatt (17) aufgebracht wird, das als Schutzmittel (17) auf den beiden Klebeschichten dient; das **dadurch gekennzeichnet ist, dass** das Blatt (17) und die Klappe (14) gemeinsam geschwächt werden, um eine erste Schwächungslinie im Trennbereich (144) der Klappe (14) zu schaffen, die mit einer dritten Perforationslinie im Blatt (17) fluchtet, und eine zweite Perforationslinie im Trennbereich (144) der Klappe (14) zu schaffen, die mit einer vierten Schwächungslinie im Blatt (17) fluchtet, wobei die Schwächungslinien sich im Trennbereich (144) parallel zueinander erstrecken.

9. Verfahren gemäß Anspruch 8, demzufolge der Umschlag (1) ausgehend von einem Streifen (3) aus weichem Material gebildet wird, auf dem zunächst die Klebeschichten und das Schutzblatt (17) aufgebracht werden, der Streifen (3) sodann durch Zusammenfügen der Bahnen des Streifens (3) zu einem Schlauch geschlossen wird, der Schlauch anschließend in Abschnitte unterteilt wird, wobei man die Klappe (14) an einem ersten Ende des Abschnitts (3') fortbestehen lässt und jeder Abschnitt (3') nach dem Schließen eines zweiten, dem ersten gegenüberliegenden Endes einen Umschlag bildet (1).

10. Verfahren gemäß Anspruch 9, bei dem die Schwächungslinien nach der Unterteilung des Schlauchs in Abschnitte geschaffen werden.

11. Verfahren gemäß Anspruch 8, dem zufolge der Umschlag (1) ausgehend von einem Streifen (3) aus weichem Material gebildet wird, der Streifen (3) sodann durch Zusammenfügen der Bahnen des Streifens (3) zu einem Schlauch geschlossen wird, der Schlauch anschließend in Abschnitte unterteilt wird, wobei man die Klappe (14) an einem ersten Ende des Abschnitts (3') fortbestehen lässt und jeder Abschnitt (3') nach dem Schließen eines zweiten, dem ersten gegenüberliegenden Endes einen Umschlag bildet (1); und die Klappe (14) mit den Klebeschichten und dem Schutzblatt (17) sowie den Schwächungslinien (181, 182, 183, 184) versehen wird.

12. Maschine zur Herstellung eines Umschlags (1), mit der ein Verfahren gemäß einem der Ansprüche 8 bis 10 umgesetzt wird; die eine Vorrichtung zur Bildung eines Schlauchs (6) aus einem Streifen (3) aus flexiblem Material aufweist; die eine Trennvorrichtung (7) zur Abtrennung eines Schlauchabschnitts (3') am vorderen Schlauchende aufweist, wobei an einem der Enden des Schlauchabschnitts (3') eine Verschlussklappe (14) gebildet wird; wobei die Klappe (14) den Abschnitt (3') über das Ende einer ersten Wandung (11) hinaus verlängert; die Mittel (5, 5') zur Auftragung zweier parallel zueinander verlaufenden Klebeschichten auf den Streifen (3) aufweist, die an der Verschlussklappe (14) durch einen Trennbereich (144) getrennt sind, wobei die Mittel (5, 5') darüber hinaus dafür vorgesehen sind, ein Blatt (17) aufzubringen, das als Schutz der beiden Klebeschichten dient; und die Maschine **dadurch gekennzeichnet ist, dass** diese überdies Schwächungsmittel (8) zur gemeinsamen Schaffung einer ersten und einer dritten Schwächungslinie einerseits auf der Klappe (14) und dem Blatt (17), die miteinander fluchten, andererseits im Trennbereich (144) der Klappe (14) aufweist, und um gemeinsam eine zweite Schwächungslinie und eine vierte Linie des Blatts (17) im Trennbereich (144) der Klappe (14) zu schaffen, die miteinander fluchten, wobei sich die Schwächungslinien parallel in den Trennbereich (144) erstrecken.

13. Maschine gemäß Anspruch 12, bei der die Mittel zur Auftragung (5) der Schlauchbildungsvorrichtung (6) vorgelagert sind.

14. Maschine gemäß Anspruch 12, bei der die Mittel zur Auftragung (5') der Trennvorrichtung (7) nachgelagert sind.

15. Maschine gemäß einem der Ansprüche 12 bis 14, bei der die Schwächungsmittel (8) der Vorrichtung (7) zur Abtrennung des Schlauchs und den Mitteln zur Auftragung (5, 5') nachgelagert sind.

16. Maschine gemäß einem der Ansprüche 12 bis 15, die **dadurch gekennzeichnet ist, dass** sie eine Vorrichtung zur Bildung eines Bodens (9) zur Herstellung des Umschlags (1) mit jedem Schlauchabschnitt (3') aufweist, indem sie den vorderen Teil des Schlauchabschnitts (3') schließt.

## Claims

1. Envelope comprising an opening (15) and a closure flap (14) to close the opening (15), the closure flap (14) being foldable down on to a first wall (11) of the envelope (1) and comprising on an inner face (140) a first adhesive layer (141) protected by protection means (17), a second adhesive layer (142) protected by the protection means (17) and separated from the first adhesive layer (141) by a separation space (144), the flap (14) being pre-cut by a first and a second weakening line (181, 182) in the separation space (144), the protection means consisting of a sheet (17) extending over both adhesive layers (141, 142), **characterised in that** the sheet (17) comprises a third weakening line (183) aligned with the first weakening line (181) and a fourth weakening line (184) aligned with the second weakening line (182).

2. Envelope as per claim 1, in which the sheet (17) and the flap (14) are stuck between the weakening lines (181, 182, 183, 184).

3. Envelope as per one of claims 1 or 2, in which the weakening lines (181, 182, 183, 184) are lines of perforations.

4. Envelope as per one of claims 1 or 2, in which the weakening lines (181, 182, 183, 184) are lines pre-cut in the thickness.

5. Envelope as per one of the previous claims, **characterised by** the fact it comprises a second wall (12), whose flap (14) extends from and is linked to the first wall (11) along outer edges (110) of the first wall (11).

6. Envelope as per claim 5, in which the first and second walls (11, 12) are linked by gussets (13) extending along the outer edges (110).

7. Envelope as per one of the previous claims, in which the flap (14) comprises an incision (145) in at least one end of at least one of the weakening lines.

8. Process for manufacturing an envelope (1) as per one of the claims 1 to 7, whereby a closure flap (14) is formed in the prolongation of a second wall (12) of the envelope (1), two adhesive layers are placed on the flap (14) parallel to each other and separated by a separation space (144), a sheet (17) being placed on the two adhesive layers to form a protection means (17), **characterised in that** the sheet (17) and the flap (14) together are weakened to form a first weakening line in the separation space (144) on the flap (14) aligned with a third line of perforations in the sheet (17), and a second line of perforations in the separation space (144) on flap (14) aligned with a fourth weakening line in the sheet (17), the weakening lines extending in parallel in the separation space (144).

9. Process as per claim 8 whereby the envelope (1) is formed from a strip (3) of flexible material on which firstly adhesive layers and the protection sheet (17) are placed, then the strip (3) is closed to form a tube by joining the widths of the strip (3), then the tube is separated into sections leaving the flap (14) at a first end of the section (3'), each section (3') forming an envelope (1) after the closing of a second end opposite the first end.

10. Process as per claim 9 in which the weakening lines are made after the separation of the tube into sections.

11. Process as per claim 8 whereby the envelope (1) is formed from a strip (3) of flexible material closed to form a tube by joining the widths of the strip (3), then the tube is separated into sections leaving the flap (14) at a first end of the section (3'), each section (3') forming an envelope (1) after the closing of a second end opposite the first end, and flap (14) on which adhesive layers, protection sheet (17) and weakening lines (181, 182, 183, 184) are placed.

12. Machine for manufacturing an envelope (1) using a process as per one of the claims 8 to 10, the machine comprising a tube forming device (6) to form a tube from a strip (3) of flexible material, a separation device (7) to separate a section (3') from the tube at the front of the tube while forming a closure flap (14) at one end of the tube section (3'), the flap (14) extending the section (3') beyond the end of a first wall (11), placement means (5, 5') for placing two adhesive layers on the strip of material (3) in parallel with each other and separated by a separation space (144) at the level of the closure flap (14), the placement means (5, 5') being designed to also place a sheet (17) forming protection means on both adhesive layers, the machine being **characterised by** the fact it comprises weakening means (8) for making together a first weakening line and a third weakening line respectively on the flap (14) and the sheet (17) aligned and in the separation space (144) of the flap (14), and for making together a second weakening line and a fourth line of the sheet (17) in the separation space (144) of the flap (14) and aligned, the weakening lines extending in parallel in the separation space (144).

13. Machine as per claim 12 in which the placement means (5) is situated upstream of the tube formation device (6).

14. Machine as per claim 12 in which the placement means (5') is situated downstream of the separation device (7).

15. Machine as per claims 12 to 14 in which the weakening means (8) is situated downstream of the tube separation device (7) and of the placement means (5, 5').

16. Machine as per one of the claims 12 to 15, **characterised by** the fact it comprises a base formation device (9) to form the envelope (1) with each tube section (3') by closing the front of the tube section (3').
